# EUROPÄISCHE PATENTSCHRIFT

(11) **EP 2 592 709 B1**
(45) Veröffentlichungstag und Bekanntmachung des Hinweises auf die Patenterteilung: **28.09.2016**
(21) Anmeldenummer: 11188306.2
(22) Anmeldetag: 08.11.2011
(51) Int. Cl.: H02J 3/14, H02J 3/38, H02J 7/00

(54) **Verfahren und Vorrichtung zur Steuerung der Stabilität eines Niederspannungsnetzes**
Method and device for controlling the stability of a low voltage network
Procédé et dispositif de commande de la stabilité d'un réseau basse tension

(43) Veröffentlichungstag der Anmeldung: 15.05.2013
(73) Patentinhaber: SAG GmbH, 63225 Langen (DE); Zdrallek, Markus, 57074 Siegen (DE)
(72) Erfinder: Zdrallek, Markus, 57074 Siegen (DE); Stiegler, Martin, 81377 München (DE)
(74) Vertreter: Rohmann, Michael

(56) Entgegenhaltungen:
- WO-A1-2009/019306
- WO-A2-2011/076887
- DE-A1-102008 057 563
- DE-B- 1 271 802
- US-A1- 2006 259 199
- US-A1- 2006 279 884
- US-A1- 2009 265 042
- US-A1- 2011 251 732
- BJORN GWISDORF ET AL: "Technical and economic evaluation of voltage regulation strategies for distribution grids with a high amount of fluctuating dispersed generation units", INNOVATIVE TECHNOLOGIES FOR AN EFFICIENT AND RELIABLE ELECTRICITY SUPPLY (CITRES), 2010 IEEE CONFERENCE ON, IEEE, PISCATAWAY, NJ, USA, 27. September 2010 (2010-09-27), Seiten 8-14, XP031788499, ISBN: 978-1-4244-6076-2

## Beschreibung

Die Erfindung betrifft ein Verfahren und eine Vorrichtung zur Steuerung der Stabilität eines Niederspannungsnetzes.

Die US 201/251732 A1 offenbart im Sinne des Wortlauts des Anspruches 1 ein Verfahren zur Steuerung der Stabilität eines Niederspannungsnetzes, wobei das Niederspannungsnetz von einem Ortsnetztransformator mit elektrischem Strom gespeist wird, in welchem Ortsnetztransformator die Mittelspannung auf Niederspannung transformiert wird, wobei das Niederspannungsnetz eine Hauptstromleitung aufweist, wobei von der Hauptstromleitung über eine Netzverzweigungsstelle elektrischer Strom (Speisestrom) in zumindest eine Zweigstromleitung geleitet wird, an welche Zweigstromleitung zumindest ein Stromverbraucher (Verbraucher) und/oder zumindest ein Stromerzeuger (Einspeiser) angeschlossen sind/ist, wobei die Zweigstromleitung mit dem daran angeschlossenen Verbraucher und/oder Einspeiser einen autarken Netzbezirk bildet, wobei zumindest ein Sensor an der Netzverzweigungsstelle, an der die Zweigstromleitung von der Hauptstromleitung abzweigt, angeordnet wird, wobei mit dem Sensor der Stromfluss in der Zweigstromleitung gemessen wird, wobei eine Stromentnahme des Verbrauchers aus der Zweigstromleitung und/oder ein Energieeintrag des Einspeisers in die Zweigstromleitung und/oder eine Stromeinleitung von der Hautstromleitung in die Zweigstromleitung und/oder die Einspeisung des elektrischen Stroms aus dem Ortsnetztransformator in das Niederspannungsnetz auf Basis des vom Sensor festgestellten Stromflusses mit der Maßgabe geregelt wird, dass eine Überlastung der Zweigstromleitung in dem Netzbezirk vermieden wird, indem mehrere autarke Netzbezirke vorgesehen werden, die jeweils mit zumindest einem Sensor ausgestattet werden.

Aus der Praxis ist es folglich bekannt, Spannungssysteme hinsichtlich der anliegenden Spannungen und der Stromflüsse zu überwachen. Auf diese Weise kann die Gefahr von Leitungsüberlastungen vermieden werden. Allerdings ist es mit den aus der Praxis bekannten Verfahren und Vorrichtungen nicht möglich, das 400 V-Niederspannungsnetz schnell und zuverlässig zu überwachen, um eine konstante Stromversorgung von Verbrauchern betriebssicher zu gewährleisten. Die Netzstabilität wird unter anderem durch das Einspeisen von Strom gefährdet, der von Photovoltaikanlagen (PV) erzeugt wird. Nachteilig bei den aus der Praxis bekannten Verfahren zur Netzstabilisierung ist, dass die von verschiedenen Sensoren ermittelten Messwerte an eine zentrale Leitstelle übermittelt werden müssen, von welcher Leitstelle aus dann die zur Stabilisierung des entsprechenden Netzabschnittes erforderlichen Maßnahmen eingeleitet werden müssen. Dies erfordert einen unvorteilhaft hohen Regelungsaufwand und die Handhabung großer Datenmengen.

Der Erfindung liegt daher das technische Problem zugrunde, ein Verfahren anzugeben, mit dem ein Niederspannungsnetz zuverlässig, funktionssicher und flächendeckend überwachbar ist, das sich durch eine einfache Steuerbarkeit auszeichnet und mit dem lediglich eine geringe Messdatenmenge verarbeitet werden muss. Der Erfindung liegt weiterhin das technische Problem zugrunde, eine entsprechende Vorrichtung zur Steuerung der Stabilität eines Niederspannungsnetzes anzugeben.

Die vorliegende Erfindung löst das Problem durch eine Vorrichtung und ein Verfahren entsprechend der unabhängigen Ansprüche. Weitere erfindungsgemäße Ausgestaltungen werden durch die abhängigen Ansprüche offenbart.

Zur Lösung des technischen Problems lehrt die Anmeldung zunächst ein Verfahren zur Steuerung der Stabilität eines Niederspannungsnetzes, wobei ein Niederspannungsnetz von einem Ortsnetztransformator (Ortsnetzstation) mit elektrischem Strom gespeist wird, mit welchem Ortsnetztransformator Mittelspannung auf Niederspannung transformiert wird, wobei das Niederspannungsnetz eine Hauptstromleitung aufweist, wobei von der Hauptstromleitung über zumindest eine Netzverzweigungsstelle elektrischer Strom (Speisestrom) zumindest in eine Zweigstromleitung geleitet wird, an welche Zweigstromleitung zumindest ein Stromverbraucher (Verbraucher) und/oder ein Stromerzeuger (Einspeiser) angeschlossen sind/ist, wobei die Zweigstromleitung mit dem daran angeschlossenen Verbraucher und/oder Einspeiser einen autarken Netzbezirk bildet, wobei zumindest ein Sensor an der Netzverzweigungsstelle, an der die Zweigstromleitung von der Hauptstromleitung abzweigt, angeordnet wird, wobei mit dem Sensor der Stromfluss in der Zweigstromleitung gemessen wird, wobei mehrere autarke Netzbezirke vorgesehen werden, die jeweils mit zumindest einem Sensor ausgestattet werden, wobei jeder autarke Netzbezirk über zumindest einen eingangsseitig und über zumindest einen ausgangseitig in der Zweigstromleitung angeordneten Sensor verfügt, wobei von den Sensoren der autarken Netzbezirke ermittelte Messwerte zwischen den Sensoren und/oder dem Ortsnetztransformator ausgetauscht werden wobei die Sensoren in als Kabelverteilerschränken ausgebildeten Netzverzweigungsstellen angeordnet werden und wobei an signifikanten Verbrauchern und/oder Einspeisern, beispielsweise Photovoltaikanalagen, Blockheizkraftwerke und /oder Biogasanlagen, weitere Sensoren angeordnet werden und wobei eine Stromentnahme des Verbrauchers aus der Zweigstromleitung und/oder ein Energieeintrag des Einspeisers in die Zweigstromleitung und/oder eine Stromeinleitung von der Hauptstromleitung in die Zweigstromleitung und/oder die Einspeisung des elektrischen Stroms aus dem Ortsnetztransformator in das Niederspannungsnetz auf Basis des von den Sensoren festgestellten Stromflusses mit der Maßgabe geregelt wird, dass eine Überlastung der Zweigstromleitung in dem Netzbezirk vermieden wird.

Mittelspannung meint im Rahmen der Erfindung eine Wechselspannung von 10 kV bis 20 kV. Niederspannung meint im Rahmen der Erfindung insbesondere eine dreiphasige Spannung von ungefähr 400 V. Gemäß einer bevorzugten Ausführungsform ist es erforderlich, dass in dem Niederspannungsnetz stets eine Leiter-Erde-Spannung (Sternspannung) von 230 V anliegt, die beispielsweise um maximal 10 % variieren darf. Die Niederspannung muss dann also derart geregelt werden, dass die Leiter-Erde-Spannung zweckmäßigerweise zwischen 207 V und 253 V liegt. Der bevorzugte Spannungsbereich zwischen 207 V und 253 V wird im Rahmen der Erfindung als Spannungsband bezeichnet.

Ein Verbraucher wird insbesondere von einem stromverbrauchenden Haushalt, einer Ladestation für Elektromobile o. dgl. gebildet ist. Ein Stromerzeuger bzw. ein Einspeiser ist vorzugsweise zumindest eine Einheit, die aus der Gruppe "Photovoltaikanlage, Windkraftanlage, Biogasanlage" ausgewählt ist.

Der autarke Netzbezirk ist vorzugsweise zwischen dem eingangsseitigen Sensor und dem ausgangsseitigen Sensor angeordnet. Es liegt im Rahmen der Erfindung, dass die Summe der Ströme bzw. der Speiseströme eines autarken Netzbezirks gemessen und/oder überwacht wird. Erfindungsgemäß wird ein Sensor in einer als Kabelverteilerschrank ausgebildeten Netzverzweigungsstelle angeordnet. Auf diese Weise können aufwendige Installationsarbeiten, die u. a. mit dem Freilegen von unterirdischen Stromleitungen verbunden sind, vermieden werden. Es empfiehlt sich, dass beispielsweise ein Verbraucher und/oder ein Einspeiser in einem autarken Netzbezirk gemäß einer Ausführungsform jeweils mit einem Sensor ausgestattet wird/werden, welcher Sensor/welche Sensoren den Stromfluss zu dem Verbraucher und/oder Einspeiser bzw. den Stromabfluss von dem Einspeiser in die Zweigstromleitung misst/messen.

Gemäß einer Ausführungsform werden an einer Netzverzweigungsstelle mehrere Zweigstromleitungen von der Hauptstromleitung abgezweigt. Auf diese Weise ist der Aufbau komplexer Stromleitungstopologien möglich. Entsprechend einer Ausführungsform wird von jeder der Zweigstromleitungen, an die zumindest ein Verbraucher und/oder zumindest ein Einspeiser angeschlossen sind, ein autarker Netzbezirk gebildet. Es liegt im Rahmen der Erfindung, dass in den einzelnen autarken Netzbezirken unabhängig voneinander die Stromentnahme durch den zumindest einen Verbraucher aus der Zweigstromleitung und/oder der Energieeintrag des zumindest einen Einspeisers in die Zweigstromleitung und/oder die Stromleitung von der Hauptstromleitung in die betreffende Zweigstromleitung gemessen und/oder geregelt werden. Es empfiehlt sich, dass der Startpunkt einer Zweigstromleitung bzw. der Endpunkt einer Zweigstromleitung mit einer ersten Netzverzweigungsstelle bzw. einer zweiten Netzverzweigungsstelle verbunden sind. Empfohlenermaßen ist an der ersten Netzverzweigungsstelle und der zweiten Netzverzweigungsstelle jeweils ein Sensor angeordnet, wobei zwischen den beiden Sensoren der autarke Netzbezirk ausgebildet ist.

Vorteilhafterweise werden an die Zweigstromleitung zumindest zwei Netzzweige angeschlossen, wobei an einem Netzzweig zumindest zwei Einheiten ausgewählt aus der Gruppe "Verbraucher, Einspeiser" angeschlossen werden. Es ist möglich, dass ein autarker Netzbezirk eine Vielzahl von Netzzweigen aufweist, empfohlenermaßen ist in jedem Netzzweig zumindest ein Sensor angeordnet.

Vorzugsweise werden mit dem Sensor die Spannung in der Hauptstromleitung und der Stromfluss von der Hauptstromleitung in vorzugsweise eine Zweigstromleitung gemessen, welche Zweigstromleitung an der Netzverzweigungsstelle von der Hauptstromleitung abzweigt. Empfohlenermaßen verfügt der Sensor über eine dreiphasige Spannungsmessung, mit der die in der Hauptstromleitung anliegende Spannung messbar ist. Gemäß einer bevorzugten Ausführungsform weist der Sensor mehrere dreiphasige Strommessstellen auf, wobei die Anzahl der Strommessstellen der in der Netzverzweigungsstelle abzweigenden Zweigstromleitungen entspricht.

Gemäß einer besonders bevorzugten Ausführungsform werden die Sensoren ohne Versorgungsunterbrechung an das Niederspannungsnetz und vorzugsweise an die Hauptstromleitung und/oder die Zweigstromleitung angeschlossen. Vorteilhafterweise wird der Sensor mit isolierten Spannungsabgriffsklemmen an die Hauptstromleitung und/oder Zweigstromleitung angeschlossen.

Erfindungsgemäß werden von den Sensoren der autarken Netzbezirke ermittelte Messwerte zwischen den Sensoren und/oder dem Ortsnetztransformator ausgetauscht. Auf diese Weise ist es möglich, dass durch Sensoren, die eingangsseitig und ausgangsseitig an dem autarken Netzbezirk angeordnet sind, die Gesamtströme und/oder die Spannung des autarken Netzbezirks erfasst werden. Dieser Gesamtstrom wird im Rahmen der Erfindung als Ersatzwert bezeichnet und ermöglicht die Generierung von Ersatzleistungswerten für die einzelnen Verbraucher des autarken Netzbezirks, an denen keine direkte Leistungsmessung erfolgt. Die Ersatzdaten stellen vorzugsweise gemittelte Stromflussdaten in einem autarken Netzbezirk dar. Gemäß einer bevorzugten Ausführungsform ist es ohne Kenntnis der Stromverbräuche des Verbrauchers und/oder der Stromerzeugung des Einspeisers möglich, die Stromflüsse in einem autarken Netzbezirk zu erfassen und in Abhängigkeit der Ersatzwerte Stromflüsse in einem autarken Netzbezirk zu regeln. Von den Sensoren festgestellte Stromflüsse und/oder Spannungen (Messdaten) werden im Rahmen der Erfindung empfohlenermaßen auf Ethernet basierenden Datenübertragungsgeräten bereitgestellt. Zweckmäßigerweise erfolgt die Kommunikation zwischen den bevorzugt dezentral in den einzelnen Netzbezirken angeordneten Sensoren und einer Fernwirkstation über ein besonders bevorzugt gesichertes und vorteilhafterweise echtzeitfähiges Standardprotokoll. Es ist möglich, dass die Daten der Sensoren kabelgebunden, beispielsweise glasfaserkabelgebunden oder telefonkabelgebunden oder per Funk an die Fernwirkstation übermittelt werden.

Es empfiehlt sich, dass der Strom und/oder die Spannung in periodischen Abständen von dem Sensor gemessen wird. Zweckmäßigerweise messen alle in dem Verfahren eingesetzten Sensoren den Strom und die Spannung in periodischen Abständen. Gemäß einer Ausführungsform beträgt das Zeitintervall zwischen zwei Messungen 10 sek bis 90 sek und bevorzugt 25 sek bis 65 sek. Die Messung des Stroms und der Spannung erfolgt im Rahmen der Erfindung beispielsweise in zeitlichen Abständen von 30 sek oder 60 sek. Auf diese Weise wird sichergestellt, dass in der Fernwirkstation Echtzeitdaten über den Zustand des Niederspannungsnetzes vorliegen.

Gemäß einer Ausführungsform wird an dem Netzzweig, der von der Zweigstromleitung abzweigt, zumindest ein Sensor angeordnet, mit dem der Stromfluss in dem Netzzweig und/oder die Spannung in dem Netzzweig gemessen wird. Vorzugsweise werden an Außengrenzen des autarken Netzbezirkes die Ströme in den Netzzweigen überwacht. Es liegt im Rahmen der Erfindung, dass ein Belastungsgrad eines jeden Netzzweigs anhand des in dem Netzzweig gemessenen Stromflusses und/oder der in dem Netzzweig gemessenen Spannung ermittelt wird, wobei der Speisestrom in Abhängigkeit eines Belastungsgrads auf die zumindest zwei Netzzweige verteilt wird. Vorteilhafterweise beginnt die Aufteilung des Speisestroms mit dem Netzzweig, der den höchsten potentiellen Belastungsgrad des autarken Netzbezirks aufweist. Dies stellt den kritischsten Belastungsfall dar. Der Belastungsgrad ergibt sich aus einem Quotienten der maximal möglichen Strombelastung eines Netzzweigs und der Strombelastbarkeit des Netzzweigs. Auf diese Weise wird gewährleistet, dass an dem Sensor und/oder der Fernwirkstation die mögliche, potentielle Belastbarkeit des Niederspannungsnetzes in dem autarken Netzbezirk und besonders bevorzugt in den einzelnen Netzzweigen des autarken Netzbezirks bekannt sind.

Es empfiehlt sich, dass die von den Sensoren aufgenommenen Messdaten an die Fernwirkstation übermittelt werden, wobei durch die Fernwirkstation ein an dem Verbraucher angeordneter Aktuator und/oder ein an dem Einspeiser angeordneter Aktuator angesprochen wird, welcher Aktuator die Stromaufnahme des Verbrauchers regelt und/oder welcher Aktuator die Stromabgabe des Einspeisers einstellt. Vorteilhafterweise werden mit dem erfindungsgemäßen Verfahren steuerbare Verbraucher im Niederspannungsnetz mittels des Aktuators angesteuert. Gemäß einer Ausführungsform ist das "first-come-first-serve"-Prinzip bzw. ein Warteschlangenkonzept bei der Versorgung der Verbraucher mit Strom, insbesondere bei dem Laden von Elektrofahrzeugen, möglich. Steht eine große Stromstärke zur Verfügung, ist im Rahmen der Erfindung die Leitung von Strom zu einer Mehrzahl von Verbrauchern und vorzugsweise das Aufladen einer Vielzahl von Elektroautos mit hohen Ladeströmen möglich. Sinkt beispielsweise durch nachlassende Sonneneinstrahlung der Ertrag aus Photovoltaikanlagen, kann es erforderlich sein, zur Stabilisierung des Niederspannungsnetzes den Stromverbrauch an die produzierte Strommenge anzupassen. Vorteilhafterweise kann über einen Aktuator ein Verbraucher, bevorzugt eine Ladeeinheit für Elektroautos, derart angesteuert werden, dass der Stromverbrauch und beispielsweise die Anzahl der simultan durchführbaren Ladevorgänge beschränkt oder die Höhe des Ladestromes vermindert wird. Auf diese Weise erfährt das Niederspannungsnetz eine Stabilisierung. Vorzugsweise kann empfohlenermaßen mit der Fernwirkstation auf die Stromerzeugung in einer Biogasanlage eingewirkt werden, so dass bei einer hohen Stromnachfrage die Biogasanlage in einen Stromproduktionsmodus gesetzt wird. Wird eine geringe Strommenge nachgefragt, so kann im Rahmen der Erfindung die Biogasanlage durch die Fernwirkstation und den Aktuator in einen Gasbetriebsmodus geschaltet werden, in dem von der Biogasanlage keine elektrische Energie in das Niederspannungsnetz eingespeist wird. Weiterhin ist es möglich, den Aktuator beispielsweise einer Photovoltaikanlage durch die Fernwirkstation zu steuern, so dass ein als dezentraler Einspeiser, vorzugsweise die Photovoltaikanlage, hinsichtlich seiner Leistung einer momentanen Netzauslastung angepasst wird. Wird durch die Verbraucher nur eine geringe Leistung abgerufen, so kann ein Einspeiser, insbesondere die Photovoltaikanlage, vorübergehend, beispielsweise auf ein Leistungsvermögen von vorzugsweise 80 %, gegebenenfalls 50 % und im Bedarfsfall 0 % in Bezug auf seine mögliche Einspeiseleistung reduziert werden. Auf diese Weise ist eine kritische Netzauslastung vermeidbar.

Weiterhin betrifft die Anmeldung ein System mit einer Vorrichtung zur Steuerung der Stabilität eines Niederspannungsnetzes, wobei an einen Ortsnetztransformator ein Niederspannungsnetz angeschlossen ist und mit elektrischem Strom durch den Ortsnetztransformator versorgbar ist, wobei mit dem Ortsnetztransformator Mittelspannung auf Niederspannung transformierbar ist, wobei das Niederspannungsnetz eine Hauptstromleitung aufweist, wobei von der Hauptstromleitung über eine Netzverzweigungsstelle elektrischer Strom in zumindest eine Zweigstromleitung leitbar ist, an welche Zweigstromleitung zumindest ein Stromverbraucher (Verbraucher) und/oder ein Stromerzeuger (Einspeiser) angeschlossen sind/ist, wobei die Zweigstromleitung mit dem daran angeschlossenen Verbraucher und/oder Einspeiser einen autarken Netzbezirk bildet, wobei zumindest ein Sensor an der Netzverzeigungsstelle, an der die Zweigstromleitung von der Hauptstromleitung abzweigt, angeordnet ist, wobei mit dem Sensor der Stromfluss in der Zweigstromleitung messbar ist, wobei mehrere autarke Netzbezirke vorgesehen werden, die jeweils mit zumindest einem Sensor ausgestattet werden, wobei jeder autarke Netzbezirk über zumindest einen eingangsseitig und über zumindest einen ausgangsseitig in der Zweigstromleitung angeordneten Sensor verfügt, wobei von den Sensoren der autarken Netzbezirke ermittelte Messwerte zwischen den Sensoren und/oder dem Ortsnetztransformator ausgetauscht werden, wobei die Sensoren in als Kabelverteilerschränken ausgebildeten Netzverzweigungsstellen angeordnet werden und wobei an signifikanten Verbrauchern und/oder Einspeisern, beispielsweise Photovoltaikanalagen, Blockheizkraftwerke und/oder Biogasanlagen, weitere Sensoren angeordnet werden und wobei eine Stromentnahme des Verbrauchers aus der Zweigstromleitung und/oder ein Energieeintrag des Einspeisers in die Zweigstromleitung und/oder eine Stromleitung von der Hauptstromleitung in die Zweigstromleitung und/oder die Einspeisung des elektrischen Stroms aus dem Ortsnetztransformator in das Niederspannungsnetz auf Basis des von den Sensoren festgestellten Stromflusses mit der Maßgabe regelbar ist, dass eine Überlastung der Zweigstromleitung in dem Netzbezirk vermieden wird.

Der Sensor ist in einer besonders vorteilhaften Ausführungsform mit der Maßgabe ausgestaltet, dass die in der Hauptstromleitung anliegende Spannung und der Stromfluss in der Zweigstromleitung messbar sind. Erfindungsgemäß ist der Sensor an der Netzverzweigungsstelle angeordnet, die vorzugsweise in einem vorteilhafterweise oberirdisch angeordneten Kabelverteilerschrank angeordnet ist. Das bedeutet, dass der Einbauort des Sensors problemlos für Montagezwecke zugänglich ist. Der Sensor ist gemäß einer Ausführungsform in bestehende Niederspannungsnetze integrierbar. Gemäß einer Ausführungsform verfügt der Sensor zum Ankoppeln an das Niederspannungsnetz vorzugsweise ohne Versorgungsunterbrechung über isolierte Spannungsabgriffsklemmen, die zweckmäßigerweise an die Hauptstromleitung und bevorzugt an der Netzverzweigungsstelle an die Zweigstromleitung und/oder an den Netzzweig angeschlossen werden.

Der Erfindung liegt die Erkenntnis zugrunde, dass sich mit dem erfindungsgemäßen Verfahren die Stabilität eines Niederspannungsnetzes zuverlässig sicherstellen lässt. Wesentlich ist dabei die dezentrale Organisationsstruktur, die zur Durchführung des erfindungsgemäßen Verfahrens erforderlich ist und die ohne ein zentrales, übergeordnetes Netzleitsystem auskommt. In vorteilhafter Weise gewährt das erfindungsgemäße Verfahren eine Echtzeitübersicht über den Zustand des Niederspannungsnetzes. Wesentlich dabei ist weiterhin, dass lediglich die Summe der Ströme bzw. Speiseströme in den autarken Netzbezirken mit Sensoren überwacht werden müssen und trotzdem eine detaillierte Informationsstruktur über das gesamte Niederspannungsnetz vorliegt. Durch die dezentrale Organisationsstruktur und die Ausbildung autarker Netzbezirke wird zudem verhindert, dass große Datenmengen zwischen verschiedenen Instanzen bei der Ausführung des erfindungsgemäßen Verfahrens ausgetauscht werden müssen. Infolgedessen zeichnet sich das erfindungsgemäße Verfahren durch eine einfache Regelbarkeit und hohe Sicherheit aus, wodurch eine Manipulation des Niederspannungsnetzes von außen wesentlich erschwert ist. Weiterhin liegt der Erfindung die Erkenntnis zugrunde, dass mit der erfindungsgemäßen Fernwirkstation die problemlose Koordination bzw. Regelung der Stromverbräuche in den verschiedenen autarken Netzbezirken in einem Niederspannungsnetz mit einer komplexen Topologie problemlos möglich ist. In besonders vorteilhafter Weise ist das erfindungsgemäße Verfahren in bestehenden Niederspannungsnetzen durch das Nachrüsten der Sensoren und/oder der Fernwirkstation problemlos ausführbar. Das erfindungsgemäße Verfahren zeichnet sich nicht nur durch eine Verbesserung der Stabilität des Niederspannungsnetzes sondern auch durch eine besonders vorteilhafte Wirtschaftlichkeit aus.

Nachfolgend wird die Erfindung anhand einer lediglich ein Ausführungsbeispiel darstellenden Zeichnung detailliert erläutert. Es zeigen:
- Fig. 1: eine schematische Darstellung eines erfindungsgemäßen Niederspannungsnetzes,
- Fig. 2: eine schematische Darstellung eines autarken Netzbezirks eines erfindungsgemäßen Niederspannungsnetzes,
- Fig. 3: eine schematische Ansicht eines erfindungsgemäßen Niederspannungsnetzes in einer zweiten Ausführungsform und
- Fig. 4: eine schematische Ansicht eines erfindungsgemäßen Niederspannungsnetzes in einer dritten Ausführungsform.

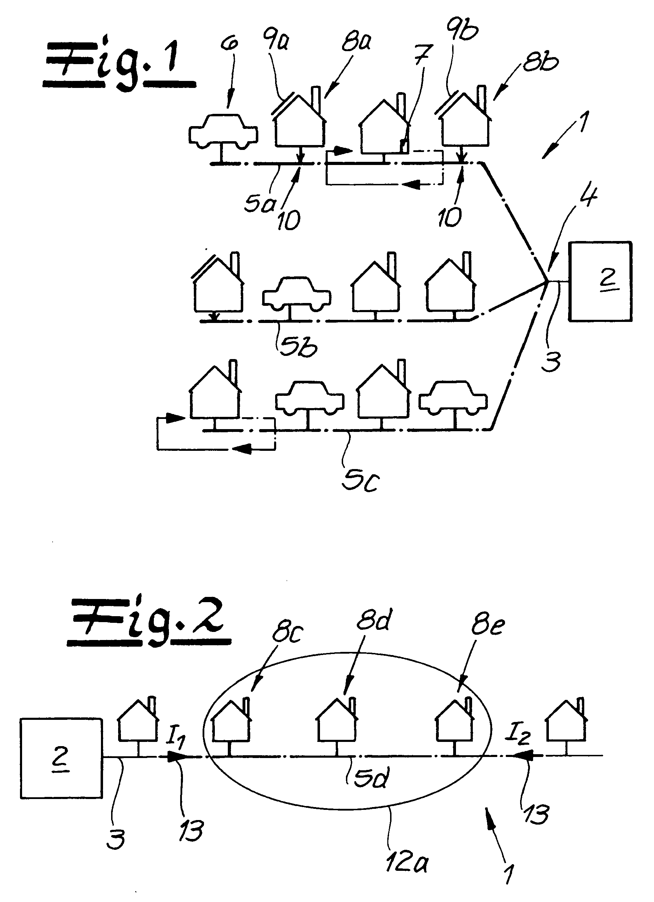

In Fig. 1 ist ein Niederspannungsnetz 1 dargestellt, das von einem Ortsnetztransformator 2 mit elektrischem Strom gespeist wird. Das Niederspannungsnetz 1 gemäß den Fig. 1 bis 4 wird mit einer Spannung von 400 V betrieben. In Fig. 1 ist eine an den Ortsnetztransformator 2 angeschlossene Hauptstromleitung 3 dargestellt, von der ein Speisestrom über eine Netzverzweigungsstelle 4 in Zweigstromleitungen 5a, 5b und 5c eingeleitet wird. An der Zweigstromleitung 5a ist gemäß Fig. 1 ein als Ladestation 6 für ein Elektroauto ausgebildeter Verbraucher und ein als Haushalt mit einer Wärmepumpe 7 ausgebildeter Verbraucher angeschlossen. Weiterhin sind an die Zweigstromleitung 5a zwei Häuser 8a, 8b angeschlossen, die gemäß Fig. 1 jeweils mit einer Photovoltaikanlage 9a, 9b ausgestattet sind. Die Häuser 8a, 8b fungieren mittels der Photovoltaikanlage 9a, 9b als Stromerzeuger bzw. Einspeiser 10. Weiterhin ist in Fig. 1 gezeigt, dass an einer Netzverzweigungsstelle 4 mehrere Zweigstromleitungen 5a, 5b, 5c von der Hauptstromleitung 3 abzweigen.

In Fig. 2 ist dargestellt, dass von den Häusern 8c, 8d, 8e eine Einheit als autarker Netzbezirk 12a gebildet ist. Die als Verbraucher ausgebildeten Häuser 8c, 8d, 8e sind an einer Zweigstromleitung 5d angeordnet, wobei die Zweigstromleitung 5d durch den autarken Netzbezirk 12a führt. An einer Eintrittsstelle der Zweigstromleitung 5d in den Netzbezirk 12a und an einer Austrittsstelle der Zweigstromleitung 5d aus dem Netzbezirk 12a ist jeweils ein Sensor 13 angeordnet, der die Stromflüsse I₁ und I₂ in der Zweigstromleitung 5d und/oder die Spannung U in der Zweigstromleitung 5d misst. Eine Stromentnahme der Verbraucher 8c, 8d, 8e aus der Zweigstromleitung 5d und/oder eine Stromeinleitung von der Hauptstromleitung 3 in die Zweigstromleitung 5d und/oder die Einspeisung des elektrischen Stroms aus dem Ortsnetztransformator 2 in das Niederspannungsnetz 1 gemäß Fig. 2 wird von dem Sensor 13 mit der Maßgabe geregelt, dass eine Überlastung der Zweigstromleitung 5d in dem Netzbezirk 12a vermieden wird und/oder dass ein Spannungsband in dem Netzbezirk 12a eingehalten wird.

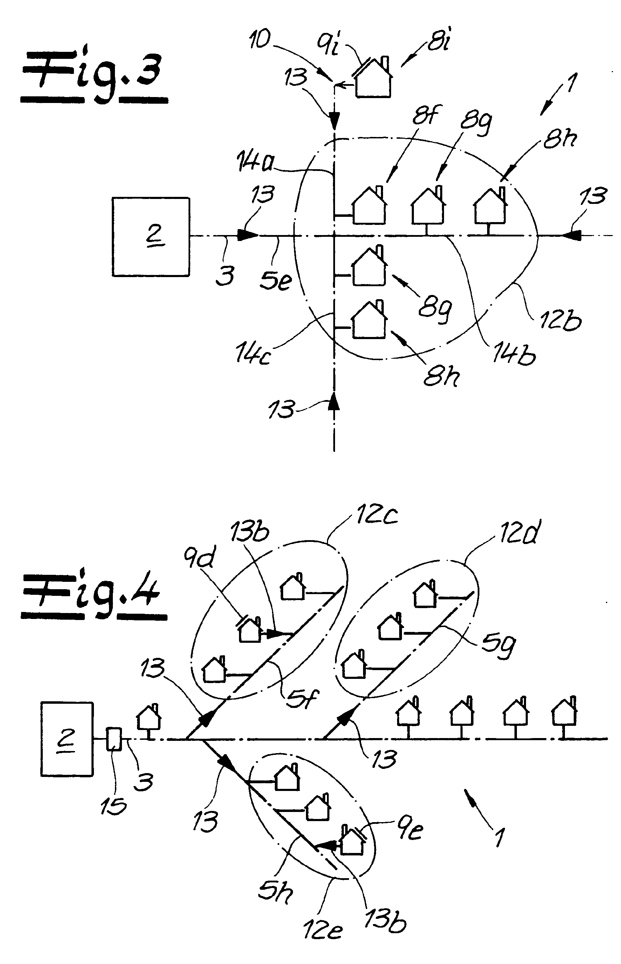

In Fig. 3 ist ein autarker Netzbezirk 12b dargestellt, bei dem an die Zweigstromleitung 5e drei Netzzweige 14a, 14b, 14c angeschlossen sind. Außerhalb des autarken Netzbezirks 12b ist an den Netzzweig 14a ein Haus 8i mit einer Photovoltaikanlage 9i als Einspeiser 10 sowie innerhalb des autarken Netzbezirkes 12b ein als Haus 8f ausgebildeter Verbraucher angeschlossen. An die Netzzweige 14b und 14c sind jeweils zwei Häuser 8g, 8h angeschlossen. Mit den Sensoren 13 ist gemäß Fig. 3 die Einspeisung von Niederspannung durch die Ortsnetzstation bzw. den Ortsnetztransformator 2 in den autarken Netzbezirk 12b und die Einspeisung von dem Strom, der durch die Photovoltaikanlage 9i erzeugt wird, steuerbar. Auf diese Weise wird bei dem Niederpannungsnetz 1 gemäß Fig. 3 sichergestellt, dass die Netzzweige 14a, 14b, 14c nicht überlastet werden und die in den Netzzweigen 14a, 14b, 14c anliegende Spannung in dem vorgeschriebenen Spannungsband liegt.

In Fig. 4 ist eine weitere Ausführungsform des Niederspannungsnetzes 1 dargestellt. Ausgehend von dem Ortsnetztransformator 2 wird über die Hauptstromleitung 3 und die Zweigstromleitungen 5f, 5g, 5h den autarken Netzbezirk 12c, 12d, 12e Strom zugeführt. In Fig. 4 ist erkennbar, dass eine Überwachung jeder einzelnen Verzweigung in dem Niederspannungsnetz 1 nicht erfolgen kann. Gemäß Fig. 4 werden die Einspeisersensoren 13b an den dezentralen Netzeinspeisungen, die von den Häusern mit den Photovoltaikanlagen 9d, 9e gebildet werden, und Sensoren 13 an den Abzweigen der Hauptstromleitung 3 positioniert. Gemäß Fig. 4 ist die Hauptstromleitung 3 die Leitung des Niederspannungsnetzes 1, die insgesamt die größte Strombelastbarkeitung aufweist.

Weiterhin ist in Fig. 4 dargestellt, dass an dem Ortsnetztransformator 2 eine Fernwirkstation 15 angeordnet ist, mit der Aktuatoren in den mit den Photovoltaikanlagen 9d, 9e ausgestatteten Häusern ansteuerbar sind. Für den Fall, dass in der Zweigstromleitung 5h eine Überlastung bzw. ein nicht eingehaltenes Spannungsband durch den Sensor 13 in der Zweigstromleitung 5h detektiert wird, leitet der Sensor 13 das Messergebnis an die Fernwirkstation 15 an dem Ortsnetztransformator 2 weiter, woraufhin der Aktuator mit der Maßgabe aktiviert wird, dass das Photovoltaikelement bzw. die Photovoltaikanlage 9e abgeschaltet wird.

## Patentansprüche

1. Verfahren zur Steuerung der Stabilität eines Niederspannungsnetzes (1), wobei das Niederspannungsnetz (1) von einem Ortsnetztransformator (2) mit elektrischem Strom gespeist wird, in welchem Ortsnetztransformator (2) die Mittelspannung auf Niederspannung transformiert wird, wobei das Niederspannungsnetz (1) eine Hauptstromleitung (3) aufweist, wobei von der Hauptstromleitung (3) über eine Netzverzweigungsstelle (4) elektrischer Strom (Speisestrom) in zumindest eine Zweigstromleitung (5a bis 5h) geleitet wird,
an welche Zweigstromleitung (5a bis 5h) zumindest ein Stromverbraucher (Verbraucher) und/oder zumindest ein Stromerzeuger (Einspeiser) (10) angeschlossen sind/ist, wobei die Zweigstromleitung (5a bis 5h) mit dem daran angeschlossenen Verbraucher und/oder Einspeiser (10) einen autarken Netzbezirk (12a bis 12c) bildet, wobei zumindest ein Sensor (13) an der Netzverzweigungsstelle (4), an der die Zweigstromleitung (5a bis 5h) von der Hauptstromleitung (3) abzweigt, angeordnet wird, wobei mit dem Sensor (13) der Stromfluss (I) in der Zweigstromleitung (5a bis 5h) gemessen wird,
wobei mehrere autarke Netzbezirke (12a bis 12e) vorgesehen werden, die jeweils mit zumindest einem Sensor (13) ausgestattet werden,
wobei jeder autarke Netzbezirk (12a bis 12c) über zumindest einen eingangsseitig und über zumindest einen ausgangseitig in der Zweigstromleitung (5a bis 5h) angeordneten Sensor (813) verfügt, wobei von den Sensoren (13) der autarken Netzbezirke (12a bis 12c) ermittelte Messwerte zwischen den Sensoren (13 und/oder dem Ortsnetztransformator (2) ausgetauscht werden
wobei die Sensoren (13) in als Kabelverteilerschränken ausgebildeten Netzverzweigungsstellen (4) angeordnet werden und
wobei an signifikanten Verbrauchern und/oder Einspeisern, beispielsweise Photovoltaikanalagen, Blockheizkraftwerke und /oder Biogasanlagen, weitere Sensoren (13) angeordnet werden und wobei eine Stromentnahme des Verbrauchers aus der Zweigstromleitung (5a bis 5h) und/oder ein Energieeintrag des Einspeisers (10) in die Zweigstromleitung (5a bis 5h) und/oder eine Stromeinleitung von der Hauptstromleitung (3) in die Zweigstromleitung (5a bis 5h) und/oder die Einspeisung des elektrischen Stroms aus dem Ortsnetztransformator (2) in das Niederspannungsnetz auf Basis des von den Sensoren (13) festgestellten Stromflusses mit der Maßgabe geregelt wird, dass eine Überlastung der Zweigstromleitung (5a bis 5h) in dem Netzbezirk (12a bis 12e) vermieden wird.

2. Verfahren nach Anspruch 1, wobei an einer Netzverzweigungsstelle (4) mehrere Zweigstromleitungen (5a bis 5h) von der Hauptstromleitung (3) abgezweigt werden.

3. Verfahren nach einem der Ansprüche 1 oder 2, wobei an die Zweigstromleitung (5e) zumindest zwei Netzzweige (14a, 14b, 14c) angeschlossen werden, wobei an einem Netzzweig (14a, 14b, 14c) zumindest zwei Einheiten ausgewählt aus der Gruppe "Verbraucher, Einspeiser (10)" angeschlossen werden.

4. Verfahren nach einem der Ansprüche 1 bis 3, wobei mit dem Sensor (13) die Spannung in der Hauptstromleitung (3) und der Stromfluss von der Hauptstromleitung (3) in vorzugsweise jede Zweigstromleitung (5a bis 5h) gemessen wird, welche Zweigstromleitung (5a bis 5h) an der Netzverzweigungsstelle (4) von der Hauptstromleitung (3) abzweigt.

5. Verfahren nach einem der Ansprüche 1 bis 4, wobei die Sensoren (13) der autarken Netzbezirke (12a bis 12e) miteinander und vorzugsweise mit dem Ortsnetztransformator (2) kommunizieren.

6. Verfahren nach einem der Ansprüche 1 bis 5, wobei der Strom und die Spannung in periodischen Abständen von den Sensoren (13) gemessen werden.

7. Verfahren nach einem der Ansprüche 3 bis 6, wobei an dem Netzzweig (14a, 14b, 14c), der von der Zweigstromleitung (5e) abzweigt, ein Sensor angeordnet wird, mit dem der Stromfluss in dem Netzzweig (14a, 14b, 14c) und/oder die Spannung in dem Netzzweig (14a, 14b, 14c) gemessen wird.

8. Verfahren nach einem der Ansprüche 3 bis 7, wobei ein Belastungsgrad eines jeden Netzzweigs (14a, 14b, 14c) anhand des in dem Netzzweig (14a, 14b, 14c) gemessenen Stromflusses und/oder der in dem Netzzweig (14a, 14b, 14c) gemessenen Spannung ermittelt wird und wobei der Speisestrom in Abhängigkeit des Belastungsgrades auf die zumindest zwei Netzzweige (14a, 14b, 14c) verteilt wird.

9. Verfahren nach einem der Ansprüche 1 bis 8, wobei die von den Sensoren (13, 13b) aufgenommenen Messdaten an eine Fernwirkstation (15) übermittelt werden, wobei durch die Fernwirkstation (15) ein an dem Verbraucher angeordneter Aktuator und/oder ein an dem Einspeiser (10) angeordneter Aktuator angesprochen wird, welcher Aktuator die Stromaufnahme des Verbrauchers regelt und/oder welcher Aktuator die Stromabgabe des Einspeisers (10) einstellt.

10. System mit einer Vorrichtung zur Steuerung der Stabilität eines Niederspannungsnetzes (1), wobei an einen Ortsnetztransformator (2) ein Niederspannungsnetz (1) angeschlossen ist und mit elektrischem Strom durch den Ortsnetztransformator (2) versorgbar ist, wobei mit dem Ortsnetztransformator (2) Mittelspannung auf Niederspannung transformierbar ist, wobei das Niederspannungsnetz (1) eine Hauptstromleitung (3) aufweist, wobei von der Hauptstromleitung (3) über eine Netzverzweigungsstelle (4) elektrischer Strom (Speisestrom) in zumindest eine Zweigstromleitung (5a bis 5h) leitbar ist,
an welche Zweigstromleitung (5a bis 5h) zumindest ein Stromverbraucher (Verbraucher) und/oder zumindest ein Stromerzeuger (Einspeiser) (10) angeschlossen sind/ist, wobei die Zweigstromleitung (5a bis 5h) mit dem daran angeschlossenen Verbraucher und/oder Einspeiser (10) einen autarken Netzbezirk (12a bis 12e) bildet, wobei zumindest ein Sensor (13) an der Netzverzweigungsstelle (4), an der die Zweigstromleitung (5a bis 5h) von der Hauptstromleitung (3) abzweigt, angeordnet ist, wobei mit dem Sensor (13) der Stromfluss in der Zweigstromleitung (5a bis 5h) messbar ist,
wobei mehrere autarke Netzbezirke (12a bis 12e) vorgesehen werden, die jeweils mit zumindest einem Sensor (13) ausgestattet werden,
wobei jeder autarke Netzbezirk (12a bis 12c) über zumindest einen eingangsseitig und über zumindest einen ausgangsseitig in der Zweigstromleitung (5a bis 5h) angeordneten Sensor (813) verfügt, wobei von den Sensoren (13) der autarken Netzbezirke (12a bis 12c) ermittelte Messwerte zwischen den Sensoren (13) und/oder dem Ortsnetztransformator (2) ausgetauscht werden,
wobei die Sensoren (13) in als Kabelverteilerschränken ausgebildeten Netzverzweigungsstellen (4) angeordnet werden und
wobei an signifikanten Verbrauchern und/oder Einspeisern, beispielsweise Photovoltaikanalagen, Blockheizkraftwerke und/oder Biogasanlagen, weitere Sensoren (13) angeordnet werden und
wobei eine Stromentnahme des Verbrauchers aus der Zweigstromleitung (5a bis 5h) und/oder ein Energieeintrag des Einspeisers (10) in die Zweigstromleitung (5a bis 5h) und/oder eine Stromeinleitung von der Hauptstromleitung (3) in die Zweigstromleitung (5a bis 5h) und/oder die Einspeisung des elektrischen Stroms aus dem Ortsnetztransformator (2) in das Niederspannungsnetz (1) auf Basis des von den Sensoren (13) festgestellten Stromflusses mit der Maßgabe regelbar ist, dass eine Überlastung der Zweigstromleitung (5a bis 5h) in dem Netzbezirk (12a bis 12e) vermieden wird.

## Claims

1. A method for controlling the stability of a low voltage network (1), wherein
the low voltage network (1) is supplied with electrical power from a local network transformer (2), in which local network transformer (2) the medium voltage is transformed to a low voltage, wherein
the low voltage network (1) has a main power cable (3), wherein electrical power (supply current) is led from the main power cable (3) via a network branch point (4) into at least one branch power cable (5a to 5h),
at least one electrical load (consumer) and/or at least one electrical generator (supplier) (10) is connected on to the said branch power cable (5a to 5h), wherein
the branch power cable (5a to 5h) with the thereto connected consumer and/or supplier (10) forms an autonomous network district (12a to 12c), wherein
at least one sensor (13) is arranged at the network branch point (4) at which the branch power cable (5a to 5h) branches off from the main power cable (3), wherein
the current flow (I) in the branch power cable (5a to 5h) is measured with the sensor (13), wherein
a plurality of autonomous network districts (12a to 12e) are provided,
each of which is fitted with at least one sensor (13), wherein
each autonomous network district (12a to 12c) has at least one sensor (813) arranged on the input side, and at least one sensor (813) arranged on the output side, of the branch power cable (5a to 5h), wherein
measured values determined by the sensors (13) of the autonomous network districts (12a to 12c) are exchanged between the sensors (13) and/or the local network transformer (2), wherein
the sensors (13) are arranged at network branch points (4) designed as cable distribution cabinets, and wherein
further sensors (13) are arranged on significant consumers and/or suppliers, for example photovoltaic plants, combined heat and power plants, and/or biogas plants, and wherein
a current draw by the consumer from the branch power cable (5a to 5h), and/or an energy input by the supplier (10) into the branch power cable (5a to 5h), and/or a power input from the main power cable (3) into the branch power cable (5a to 5h), and/or the supply of electrical power from the local network transformer (2) into the low voltage network, on the basis of the current flow determined by the sensors (13), is regulated with the condition that any overload of the branch power cable (5a to 5h) in the network district (12a to 12e) is avoided.

2. The method in accordance with claim 1, wherein
a plurality of branch power cables (5a to 5h) are branched off from the main power cable (3) at a network branch point (4).

3. The method in accordance with one of the claims 1 or 2, wherein
at least two network branches (14a, 14b, 14c) are connected to the branch power cable (5e), wherein
at least two units selected from the "consumer, supplier (10)" group are connected to a network branch (14a, 14b, 14c).

4. The method in accordance with one of the claims 1 to 3, wherein
the voltage in the main power cable (3) and the current flow from the main power cable (3), preferably into each branch power cable (5a to 5h), is measured with the sensor (13), which branch power cable (5a to 5h) branches off from the main power cable (3) at the network branch point (4).

5. The method in accordance with one of the claims 1 to 4, wherein
the sensors (13) of the autonomous network districts (12a to 12e) communicate with one another and preferably with the local network transformer (2).

6. The method in accordance with one of the claims 1 to 5, wherein
the current and the voltage are measured by the sensors (13) at periodic intervals.

7. The method in accordance with one of the claims 3 to 6, wherein
a sensor is arranged at the network branch (14a, 14b, 14c), which branches off from the branch power cable (5e); with this sensor is measured the current flow in the network branch (14a, 14b, 14c) and/or the voltage in the network branch (14a, 14b, 14c).

8. The method in accordance with one of the claims 3 to 7, wherein
a load level on each network branch (14a, 14b, 14c) is determined with the current flow measured in the network branch (14a, 14b, 14c), and/or the voltage measured in the network branch (14a, 14b, 14c), and wherein
the supply current is distributed to the at least two network branches (14a, 14b, 14c) as a function of load level.

9. The method in accordance with one of the claims 1 to 8, wherein
the measured data recorded by the sensors (13, 13b) are transmitted to a remote actuation station (15), wherein
by means of the remote actuation station (15), an actuator arranged on the consumer, and/or an actuator arranged on the supplier (10) is addressed, which actuator regulates the power consumption of the consumer, and/or which actuator adjusts the output current of the supplier (10).

10. A system with a device for controlling the stability of a low voltage network (1), wherein
a low voltage network (1) is connected to a local network transformer (2) and can be supplied with electrical power by the local network transformer (2), wherein
with the local network transformer (2) medium voltage can be transformed into low voltage, wherein
the low voltage network (1) has a main power cable (3), wherein
electrical power (supply current) can be led from the main power cable (3) via a network branch point (4) into at least one branch power cable (5a to 5h),
at least one electrical load (consumer), and/or at least one electrical generator (supplier) (10) is/are connected on to the said branch power cable (5a to 5h), wherein
the branch power cable (5a to 5h) with the thereto connected consumer and/or supplier (10) forms an autonomous network district (12a to 12e), wherein
at least one sensor (13) is arranged at the network branch point (4) at which the branch power cable (5a to 5h) branches off from the main power cable (3), wherein
the current flow (1) in the branch current cable (5a to 5h) can be measured with the sensor (13), wherein
a plurality of autonomous network districts (12a to 12e) are provided, each of which is fitted with at least one sensor (13), wherein
each autonomous network district (12a to 12c) has at least one sensor (813) arranged on the input side, and at least one sensor (813) arranged on the output side, of the branch current cable (5a to 5h), wherein
measured values determined by the sensors (13) of the autonomous network districts (12a to 12c) are exchanged between the sensors (13) and/or the local network transformer (2), wherein
the sensors (13) are arranged at network branch points (4) designed as cable distribution cabinets, and wherein
further sensors (13) are arranged on significant consumers and/or suppliers, for example photovoltaic plants, combined heat and power plants, and/or biogas plants, and wherein
a current draw by the consumer from the branch power cable (5a to 5h), and/or an energy input by the supplier (10) into the branch power cable (5a to 5h), and/or a power input from the main power cable (3) into the branch power cable (5a to 5h), and/or the supply of electrical power from the local network transformer (2) into the low voltage network (1), on the basis of the current flow determined by the sensors (13), can be regulated with the condition that any overload of the branch power cable (5a to 5h) in the network district (12a to 12e) is avoided.

## Revendications

1. Procédé destiné à commander la stabilité d'un réseau basse tension (1), le réseau basse tension (1) étant alimenté en courant électrique par un transformateur (2) de réseau local, dans lequel transformateur (2) de réseau local, la moyenne tension est transformée en basse tension, le réseau basse tension (1) comportant une ligne électrique principale (3), à partir de la ligne électrique principale (3), par l'intermédiaire d'un point de dérivation (4) du réseau, du courant électrique (courant d'alimentation) étant conduit dans au moins une ligne électrique de dérivation (5a à 5h),
sur laquelle ligne électrique de dérivation (5a à 5h) étant raccordé(s) au moins un consommateur électrique (consommateur) et/au moins un générateur de courant (alimentation) (10), la ligne électrique de dérivation (5a à 5h) avec le consommateur et/ou l'alimentation (10) raccordé(e) formant un réseau de district (12a à 12c) autonome, au moins un capteur (13) étant placé au point de dérivation (4) du réseau sur lequel la ligne électrique de dérivation (5a à 5h) dérive de la ligne électrique principale (3), avec le capteur (13), le flux de courant (I) étant mesuré dans la ligne électrique de dérivation (5a à 5h),
plusieurs réseaux de district (12a à 12e) autonomes étant prévus qui sont équipés chacun d'au moins un capteur (13),
chaque réseau de district (12a à 12c) autonome disposant d'au moins un capteur (813) placé côté entrée et d'au moins un placé côté sortie dans la ligne électrique de dérivation (5a à 5h), des valeurs de mesure déterminées par les capteurs (13) des réseaux de district (12a à 12c) autonomes étant échangées entre les capteurs (13) et/ou le transformateur (2) de réseau local,
les capteurs (13) étant placés dans des points de dérivation (4) du réseau conçus sous la forme d'armoires de distribution de câbles et
des capteurs (13) supplémentaires étant placés sur des consommateurs et/ou alimentations significatif(ve)s, par exemple des installations photovoltaïques, des centrales thermiques en montage bloc et/ou des installations de biogaz et un prélèvement de courant du consommateur à partir de la ligne électrique de dérivation (5a à 5h) et/ou un apport d'énergie par l'alimentation (10) dans la ligne électrique de dérivation (5a à 5h) et/ou une introduction de courant de la ligne électrique principale (3) dans la ligne électrique de dérivation (5a à 5h) et/ou l'alimentation du courant électrique à partir du transformateur (2) de réseau local dans le réseau basse tension étant réglé sur la base du flux de courant constaté par les capteurs (13), avec la consigne qu'une surcharge de la ligne électrique de dérivation (5a à 5h) dans le réseau de district (12a à 12e) soit évitée.

2. Procédé selon la revendication 1, sur un point de dérivation (4) du réseau, plusieurs lignes électriques de dérivation (5a à 5h) étant dérivées de la ligne électrique principale (3).

3. Procédé selon l'une quelconque des revendications 1 ou 2, sur la ligne électrique de dérivation (5e) étant raccordés au moins deux branchements de réseau (14a, 14b, 14c), sur un branchement de réseau (14a, 14b, 14c) étant raccordées au moins deux unités, choisies dans le groupe comportant « les consommateurs, alimentations (10) ».

4. Procédé selon l'une quelconque des revendications 1 à 3, avec le capteur (13), la tension dans la ligne électrique principale (3) et le flux de courant à partir de la ligne électrique principale (3) étant mesurés de préférence dans chaque ligne électrique de dérivation (5a à 5h), laquelle ligne électrique de dérivation (5a à 5h) dérivant de la ligne électrique principale (3) sur le point de dérivation du réseau (4).

5. Procédé selon l'une quelconque des revendications 1 à 4, les capteurs (13) des réseaux de district (12a à 12e) autonomes communiquant ensemble et de préférence avec le transformateur (2) de réseau local.

6. Procédé selon l'une quelconque des revendications 1 à 5, le courant et la tension étant mesurés à intervalles réguliers par les capteurs (13).

7. Procédé selon l'une quelconque des revendications 3 à 6, sur le branchement de réseau (14a, 14b, 14c) qui dérive de la ligne électrique de dérivation (5e) étant placé un capteur, à l'aide duquel le flux de courant dans le branchement de réseau (14a, 14b, 14c) et/ou la tension dans le branchement de réseau (14a, 14b, 14c) est mesuré(e).

8. Procédé selon l'une quelconque des revendications 3 à 7, un taux de charge de chaque branchement de réseau (14a, 14b, 14c) étant déterminé à l'aide du flux de courant mesuré dans le branchement de réseau (14a, 14b, 14c) et/ou de la tension mesurée dans branchement de réseau (14a, 14b, 14c) et le courant d'alimentation étant distribué en fonction du taux de charge sur les au moins deux branchements de réseau (14a, 14b, 14c).

9. Procédé selon l'une quelconque des revendications 1 à 8, les données de mesure enregistrées par les capteurs (13, 13b) étant transmises à une station de télécommande (15), la station de télécommande (15) déclenchant un actionneur placé sur le consommateur et/ou un actionneur placé sur l'alimentation (10), lequel actionneur règle le courant absorbé du consommateur et/ou lequel actionneur ajuste le débit de courant de l'alimentation (10).

10. Système avec un dispositif destiné à commander la stabilité d'un réseau basse tension (1), un réseau basse tension (1) étant raccordé sur un transformateur (2) de réseau local et pouvant être alimenté en courant électrique par le transformateur (2) de réseau local, à l'aide du transformateur de réseau (2) local, une moyenne tension étant transformable en basse tension, le réseau basse tension (1) comportant une ligne électrique principale (3), par la ligne électrique principale (3), par l'intermédiaire d'un point de dérivation du réseau (4), du courant électrique (courant d'alimentation) pouvant être conduit dans au moins une ligne électrique de dérivation (5a à 5h),
sur laquelle ligne électrique de dérivation (5a à 5h), au moins un consommateur électrique (consommateur) et/ou au moins un générateur de courant (alimentation) (10) étant raccordé(s), la ligne électrique de dérivation (5a à 5h) avec le consommateur et/ou l'alimentation (10) raccordé(s) sur celle-ci formant un réseau de district (12a à 12e) autonome, au moins un capteur (13) étant placé au point de dérivation (4) du réseau sur lequel la ligne électrique de dérivation (5a à 5h) dérive de la ligne électrique principale (3), avec le capteur (13), le flux de courant étant mesurable dans la ligne électrique de dérivation (5a à 5h),
plusieurs réseaux de district (12a à 12e) autonomes étant prévus qui sont équipés chacun d'au moins un capteur (13),
chaque réseau de district (12a à 12c) autonome disposant d'au moins un capteur (813) placé côté entrée et d'au moins un placé côté sortie dans la ligne électrique de dérivation (5a à 5h), des valeurs de mesure déterminées par les capteurs (13) des réseaux de district (12a à 12c) autonomes étant échangées entre les capteurs (13) et/ou le transformateur (2) de réseau local,
les capteurs (13) étant placés dans des points de dérivation (4) du réseau conçus sous la forme d'armoires de distribution de câbles et
des capteurs (13) supplémentaires étant placés sur des consommateurs et/ou alimentations significatif(ve)s, par exemple des installations photovoltaïques, des centrales thermiques en montage bloc et/ou des installations de biogaz et
un prélèvement de courant du consommateur à partir de la ligne électrique de dérivation (5a à 5h) et/ou un apport d'énergie par l'alimentation (10) dans la ligne électrique de dérivation (5a à 5h) et/ou une introduction de courant de la ligne électrique principale (3) dans la ligne électrique de dérivation (5a à 5h) et/ou l'alimentation du courant électrique à partir du transformateur (2) de réseau local dans le réseau basse tension (1) étant réglable sur la base du flux de courant constaté par les capteurs (13), avec la consigne qu'une surcharge de la ligne électrique de dérivation (5a à 5h) dans le réseau de district (12a à 12c) soit évitée.
